# EUROPEAN PATENT SPECIFICATION

(11) **EP 2 954 109 B1**
(45) Date of publication and mention of the grant of the patent: **18.09.2019**
(21) Application number: 14705660.0
(22) Date of filing: 04.02.2014
(51) Int. Cl.: D04C 1/06, F16L 57/06

(54) **ENHANCED BRAIDED SLEEVE AND METHOD OF CONSTRUCTION THEREOF**
VERBESSERTER GEFLECHTSCHLAUCH UND VERFAHREN ZU SEINER HERSTELLUNG
TRESSE TUBULAIRE AMÉLIORÉE ET PROCÉDÉ POUR SON OBTENTION

(30) Priority: 06.02.2013 US 201313761049
(43) Date of publication of application: 16.12.2015
(73) Proprietor: Federal-Mogul Powertrain LLC, Southfield, MI 48034 (US)
(72) Inventor: GAO, Tianqi, Exton, PA 19341 (US); MALLOY, Cassie, M., Blue Bell, PA 19422 (US); HARRIS, David, A., Coatesville, PA 19320 (US); PIOTROWSKI, Michael, Plymouth Meeting, PA 19462 (US); KRAUSER, Leigh, Pomeroy, PA 19367 (US)
(74) Representative: HGF Limited
(86) International application number: PCT/US2014/014618
(87) International publication number: WO 2014/123869

(56) References cited:
- EP-A1- 2 549 600
- EP-A2- 0 134 864
- WO-A1-96/25542
- WO-A1-03/079509
- US-A1- 2005 257 674

## Description

### BACKGROUND OF THE INVENTION

### 1. Technical Field

This invention relates generally to textile sleeves for protecting elongate members, and more particularly to braided textile sleeves and to their method of construction.

### 2. Related Art

In applications requiring protection against abrasion and impact forces to elongate members, such as wire harnesses or tubular members, it is known to surround the elongate member with a multi-faced woven or knitted textile sleeve. For example, if woven, the fill yarn can be provided as a first yarn type to form an inner face of the sleeve, while the warp yarn can be provided as a second type of yarn, different from the first type of yarn, to form an outer face of the sleeve. As such, the first and second yarns can be selected from the type of material best suited to provide the protection desired. Likewise, if knitted, different types of yarn can be knitted together to form respective inner and outer faces having different properties, e.g. dampening, abrasion resistance. Although woven and knitted sleeves can be useful for the their intended use, in some applications, they may prove less than optimal, including, from a functional standpoint, for example, if woven, the sleeves may be too stiff, radially inflexible or radially inelastic, and if knitted, the sleeves may be too radially elastic and bulky. Further, from a manufacturing standpoint, both woven and knit sleeves are generally costly.

### SUMMARY OF THE INVENTION

In accordance with one aspect of the invention, a braided protective sleeve is provided. The sleeve has a wall extending along a longitudinal axis of the sleeve. The wall includes a plurality of braided yarns forming inner and outer surfaces of the sleeve. The inner surface bounds an internal cavity and the outer surface is exposed to the surrounding environment. The braided yarns are braided with one another in an X/Y braid pattern with X and Y being different numerical values from one another. A braided protective sleeve with all features according to the preamble of the independent claims is disclosed by WO 03/079509 A1. The yarns used in the greater of the X and Y numerical values comprise multifilaments and the yarns used in the lesser of the X and Y numerical values comprise monofilaments. Accordingly, the numerical values of X and Y can be selected as desired to provide the sleeve with the enhanced physical performance characteristics desired for the intended application.

The braided protective sleeve may further include a plurality of inserted yarns interlaced with the braided yarns, wherein the inserted yarns extend substantially parallel to the longitudinal axis. The inserted yarns further enhance the ability to provide the sleeve with the performance characteristics sought for the intended application.

The inserted yarns can be interlaced so that they are exposed to the internal cavity to provide enhanced protection to contents therein and/or an enhanced locating feature therein for attachment to the contents therein, wherein the inserted yarns are substantially concealed from the surrounding environment by the outer surface such that the inserted yarns are protected against damage.

The inserted yarns can be interlaced so that they are exposed to the surrounding environment to provide enhanced protection against abrasion and/or an enhanced locating feature for attachment to an external surface, wherein the inserted yarns can be substantially concealed from the internal cavity to avoid unwanted contact with the contents therein.

The inserted yarns can be interlaced so that at least some of the inserted yarns are exposed to the internal cavity and substantially concealed from the surrounding environment and at least some of the inserted yarns are exposed to the surrounding environment and substantially concealed from the internal cavity.

The wall may be a circumferentially continuous, seamless wall.

The wall may have opposite edges extending substantially parallel to the longitudinal axis with the opposite edges being biased into overlapping relation with one another.

In accordance with yet another aspect of the invention, a method of constructing a textile protective sleeve is provided. The method includes braiding a wall having an X/Y braid pattern extending along a longitudinal axis with an inner surface of the wall being configured to bound an internal cavity and an outer surface of the wall being exposed to the surrounding environment. Further, forming the X/Y braid pattern having different numerical values from one another. The method also includes providing the yarns used in the greater of the X and Y numerical values as multifilaments and providing the yarns used in the lesser of the X and Y numerical values as monofilaments.

The method can further include interlacing a plurality of yarns extending substantially parallel to the longitudinal axis with the braided yarns.

The method can further include exposing the interlaced yarns to the internal cavity and substantially concealing the interlaced yarns from exposure to the surrounding environment.

The method can further include exposing the interlaced yarns to the surrounding environment and substantially concealing the interlaced yarns from exposure to the internal cavity.

The method can further include exposing at least some of the interlaced yarns to the internal cavity and substantially concealing these yarns from exposure to the surrounding environment and exposing at least some of the interlaced yarns to the surrounding environment and substantially concealing these yarns from exposure to the internal cavity.

The method can further include providing at least some of the interlaced yarns as a low melt polymeric material.

The method can further include providing at least some of the interlaced yarns as multifilaments.

The method can further include providing at least some of the interlaced yarns as monofilaments.

The method can further include setting the X and Y numerical values as odd numerical values.

The method can further include setting the X and Y numerical values as even numerical values.

The method can further include braiding the wall as a circumferentially continuous, seamless wall.

The method can further include braiding the wall having opposite edges extending substantially parallel to the longitudinal axis with the edges and thermally forming the wall to bring the opposite edges into biased overlapping relation with one another.

### BRIEF DESCRIPTION OF THE DRAWINGS

These and other aspects, features and advantages of the present invention will become more readily appreciated when considered in connection with the following detailed description of presently preferred embodiments and best mode, appended claims and accompanying drawings, in which:
Figure 1 illustrates a longitudinal yarn inserted from the base plate and braided into the structure of a braid for a protective sleeve constructed in accordance with one aspect of the invention;
Figure 2a illustrates the braid from the inside showing the longitudinal yarn;
Figure 2b illustrates the braid from the outside with the longitudinal yarn hidden;
Figure 3 illustrates a 3/1 braid with a different yarn combination and with longitudinal inserted yarns shown only inside the braid sleeve .

### DETAILED DESCRIPTION OF PRESENTLY PREFERRED EMBODIMENTS

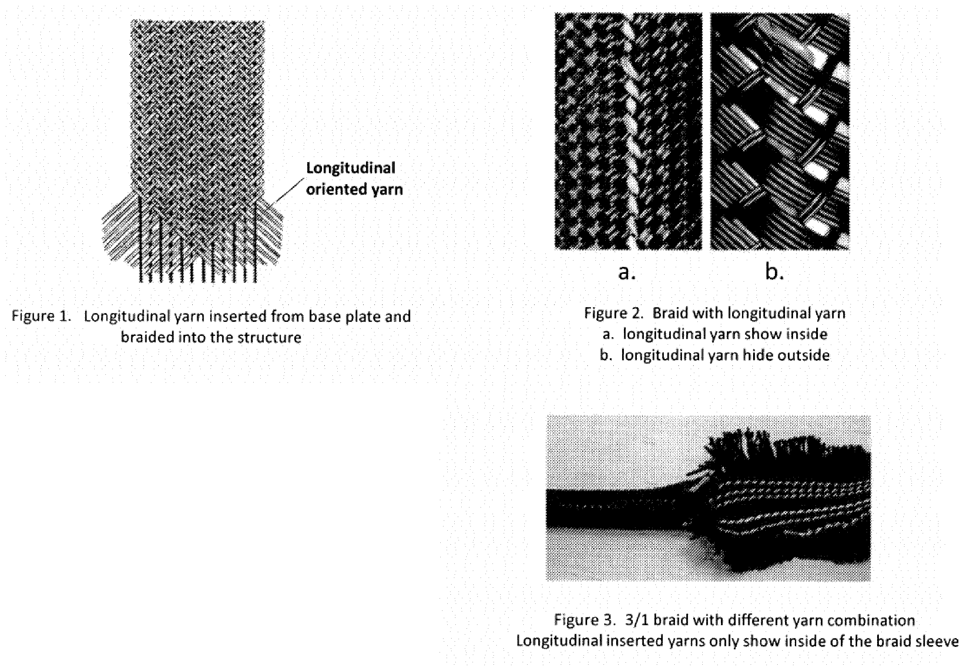

Referring in more detail to the drawings, there is shown protective braided textile sleeves constructed in accordance with certain aspects of the invention. The sleeves have similar braid patterns, however, the sleeve has a circumferentially continuous, seamless wall (Figure 3), but the sleeve can have a wrappable wall, with any other notable differences being discussed hereafter. The walls extend along a central longitudinal axis between opposite ends. The walls are formed via a plurality of braided yarns to provide inner and outer surfaces of the sleeve. The inner surface bounds an internal cavity sized for receipt of an elongate member therein, such as a pipe or wire harness, for example, and the outer surface is exposed to the surrounding environment. The braided yarns are braided with one another in an X/Y braid pattern, wherein X and Y have different numerical values from one another. The different numerical values and types of yarns can be selected to provide the sleeve with the physical characteristics sought for the intended application, with some of the physical characteristics being, by way of example and without limitation, resistance to abrasion, resistance to causing abrasion to nearby components, flexibility, crush strength, ability to remain positioned relative to an elongate member containing within the sleeve, ability to remain positioned relative to a member external to the sleeve cavity, expansion ratio, conformability, and cut resistance.

If the wall is formed as a circumferentially discontinuous wall, then the wall has opposite lengthwise extending opposite sides, also referred to as edges, corresponding to inner and outer edges, respectively. The opposite edges extend lengthwise in parallel or substantially parallel relation to the central axis and terminate at the opposite ends. At least some of the yarn used to braid the wall is provided as heat-settable polymeric yarn, such as polyethylene terephthalate (PET) or polyphenylene sulfide (PPS), for example, which can be heat set at a temperature of about 200-225 degrees Celsius. Upon being thermally formed and generally free from any externally applied forces, wall is biased by the heat-set yarn into a tubular configuration. As such, the outer edge extends beyond and overlaps the inner edge to fully enclose the cavity circumferentially, and thus, the wall provides protection against external elements about a full circumference of the wall to the elongate member contained in the cavity. The edges, when desired, are readily extendable away from one another under an externally applied force to at least partially open and expose the cavity. Accordingly, the elongate member can be readily disposed into the cavity during assembly or removed from the cavity during service. Upon releasing the externally applied force, the edges return automatically under the bias imparted by the heat-set yarn to their relaxed, overlapping position.

The wall can be braided from multifilament and monofilament yarns, depending on the performance characteristics needed for the intended application. For example, one or more of the yarns can be provided as a heat-settable polymeric material, such as monofilaments and/or multifilaments of polyethylene terephthalate (PET) or polyphenylene sulfide (PPS), for example, which can be heat set at a temperature of about 200-225 degrees Celsius. Further, the yarns can be provided as polyester, nylon, aramid, stainless steel, metallized polymeric yarns, or otherwise, depending on the physical characteristics sought for the intended application. Further, the yarns can be provided with various types of outer texturing or finish, such as by being provided as air texturized multifilaments or false twist multifilament, for example.

With reference to Figures 3, in accordance with one aspect of a braid pattern used to construct the sleeves, the yarns can be braided wherein both X and Y in the X/Y braid pattern are odd numerical values, shown, by way of example, as being a 3/1 braid pattern. Accordingly, with reference to the aforementioned X/Y braid pattern, X has a numerical value of 3, corresponding to 3 yarns being side-by-side, and Y has a numerical value of 1, corresponding to 1 yarn. It should be recognized that the 3 yarns can be braided from one or more carriers crossing paths with one another, depending on the number of bobbins placed on the carrier(s). Accordingly, a single carrier can carry 3 bobbins, or 3 carriers can be used, with each of the 3 carriers carrying a single bobbin.

With reference to Figures 2a and 2b, in accordance with another aspect of a braid pattern used to construct the sleeves, the yarns can be braided wherein both X and Y in the X/Y braid pattern are even numerical values, shown, by way of example, as being a multiple of the aforementioned 3/1 braid pattern, resulting in a 6/2 braid pattern. Accordingly, with reference to the aforementioned X/Y braid pattern, X has a numerical value of 6, corresponding to 6 yarns being side-by-side, and Y has a numerical value of 2, corresponding to 2 yarns being side-by-side. It should be recognized that the 6/2 braid pattern, being a multiple of the 3/1 braid pattern, can be formed by placing the needed extra bobbins on the same carriers used for the 3/1 braid pattern, if desired. Otherwise, additional carriers could be used.

In accordance with another aspect of a braid pattern used to construct the sleeves, the yarns can be braided wherein X has an even numerical value and Y has an odd numerical value, by way of example, as a 4/1 braid pattern. Accordingly, with reference to the aforementioned X/Y braid pattern, X has a numerical value of 4, corresponding to 4 yarns being side-by-side, and Y has a numerical value of 1, corresponding to 1 yarn.

It should be recognized that the types of yarn used in the various locations of the braid patterns discussed above can be selected as desired. For example, with regard to the 3/1 braid pattern, the 3 side-by-side yarns can be provided as highly texturized multifilament yarn and the single yarn can be provided as a monofilament. As such, the outwardly exposed side-by-side multifilament yarns provide enhanced coverage on the outer surface, as high as 96.6%, and the high strength single monofilament provides the balance of the coverage.

In addition to the braided yarns, the wall can include a plurality of inserted yarns that extend parallel or substantially parallel to the central longitudinal axis, thereby forming a tri-axial braid. The inserted yarns are interlaced with the braided yarns during the braiding process. The inserted yarns are inserted from base plates, with the location of the inserted yarns, internal (Figures 2, 3), external or internal and external, being determined based on the location of the base plates relative to the carriers.

For example, the inserted yarns can be inserted to extend along the inner surface of the wall, and thus, are entirely or substantially exposed to the internal cavity while being concealed or substantially concealed from the surrounding environment by the outer surface. Accordingly, while viewing the sleeve from the outside environment, the inserted yarns are indiscernible. As such, the inserted yarns are substantially concealed and protected from the environment, while at the same time, able to provide the desired features and protection to the sleeve and the contents therein.

In another example, the inserted yarns can be inserted to extend along the outer surface of the wall, and thus, are entirely or substantially exposed to the environment, while being concealed or substantially concealed from the internal cavity by the inner surface. Accordingly, while viewing the sleeve from the outside environment, the inserted yarns are visible. As such, the inserted yarns are substantially concealed and shield from contacting the elongate member within the cavity, while at the same time, able to provide the desired features and protection to the sleeve along the outer surface thereof.

In yet another example, the inserted yarns can be inserted to extend along both the inner surface and the outer surface of the wall, and thus, the respective inserted yarns are entirely or substantially exposed to the internal cavity and the environment. It should be recognized that the inserted yarns along the inner surface, though exposed to the internal cavity, remain indiscernible from the outer surface and that the inserted yarns along the outer surface, though exposed to the environment, remain concealed and shielded from the internal cavity. Accordingly, the yarns inserted along the inner surface can be selected to perform their intended function, while the yarns inserted along the outer surface can be selected to perform their intended function, while at least some of the types of yarn selected to extend along the inner and outer surfaces may be different.

The inserted yarns can be provided as multifilaments, monofilaments or a combination thereof, and can be provided in any desired type of material, whether polymeric, metallic, and organic or inorganic fibers. In one example, at least some of the inserted yarns are provided as an adhesive yarn, such as those including a low melt polymeric material, for example, low melt nylon or low melt polyester, or the low melt yarn can be provided as a bicomponent yarn having an outer sheath formed of the low melt polymeric material with an inner core be formed of a higher temperature, increased strength polymeric material. As such, in application, if inserted along the inner surface, the low melt material provides a mechanism by which to attach the inner surface of the sleeve to the elongate member therein, thereby securing the sleeve against relative movement with the elongate member. Further, if inserted along the outer surface, the low melt material provides a mechanism by which to attach the outer surface of the sleeve to a neighboring member, thereby securing the sleeve against relative movement with the neighboring member. In addition, at least some of the inserted yarns can be provided as a soft, cushion material, such as a low density multifilament yarn, for example, thereby providing a cushion barrier to the elongate member within the sleeve. Further, at least some of the inserted yarns can be provided as a high strength, abrasion resistant monofilament, such as along the outer surface, thereby providing enhanced protection to the braided yarns against abrasion or other types of damage.

Many modifications and variations of the present invention are possible in light of the above teachings. It is, therefore, to be understood that the invention may be practiced otherwise than as specifically described, and that the scope of the invention is defined by any ultimately allowed claims.

## Claims

1. A braided protective sleeve, comprising:
a wall extending along a longitudinal axis of said sleeve, said wall including a plurality of braided monofilament and multifilament yarns forming inner and outer surfaces of said sleeve, said inner surface bounding an internal cavity and said outer surface being exposed to the surrounding environment, said braided yarns being braided with one another in a X/Y braid pattern with X and Y being different numerical values from one another, **characterised in that** the yarns used in the greater of the X and Y numerical values comprise multifilaments and the yarns used in the lesser of the X and Y numerical values comprise monofilaments.

2. The braided protective sleeve of claim 1 further including a plurality of inserted yarns, said inserted yarns extending substantially parallel to said longitudinal axis and being interlaced with said braided yarns.

3. The braided protective sleeve of claim 2 wherein said inserted yarns are either exposed to said internal cavity and substantially concealed from the surrounding environment by said outer surface or exposed to the surrounding environment and substantially concealed from said internal cavity.

4. The braided protective sleeve of claim 2 wherein at least some of said inserted yarns are exposed to said internal cavity and substantially concealed from the surrounding environment by said outer surface and at least some of said inserted yarns are exposed to the surrounding environment and substantially concealed from said internal cavity.

5. The braided protective sleeve of claim 2 wherein at least some of said inserted yarns are a low melt polymeric material or are multifilaments or are monofilaments.

6. The braided protective sleeve of claim 1 wherein X and Y are odd numerical values, for example wherein X has a numerical value of 1 and Y has a numerical value of 3.

7. The braided protective sleeve of claim 1 wherein X and Y are even numerical values, for example wherein X has a numerical value of 2 and Y has a numerical value of 6.

8. The braided protective sleeve of claim 1 wherein X and Y have numerical values that are multiple of one another.

9. The braided protective sleeve of claim 1 wherein X has an odd numerical value and Y has an even numerical value.

10. The braided protective sleeve of claim 1 wherein said wall is either a circumferentially continuous, seamless wall or has opposite edges extending substantially parallel to said longitudinal axis, said edges being biased into overlapping relation with one another.

11. A method of constructing a textile protective sleeve, comprising:
braiding a wall comprising monofilament and multifilament yarns having a X/Y braid pattern extending along a longitudinal axis with an inner surface of the wall bounding an internal cavity and an outer surface of the wall being exposed to the surrounding environment with the X and Y values of the X/Y braid pattern being different numerical values from one another; **characterised by**
providing yarns used in the greater of the X and Y numerical values as multifilaments and providing yarns used in the lesser of the X and Y numerical values as monofilaments.

12. The method of claim 11 further including
interlacing a plurality of yarns extending substantially parallel to the longitudinal axis with the braided yarns and, optionally,
exposing the interlaced yarns to the internal cavity and substantially concealing the interlaced yarns from exposure to the surrounding environment or
exposing the interlaced yarns to the surrounding environment and substantially concealing the interlaced yarns from exposure to the internal cavity or
exposing at least some of the interlaced yarns to the internal cavity and substantially concealing them from exposure to the surrounding environment and exposing at least some of the interlaced yarns to the surrounding environment and substantially concealing them from exposure to the internal cavity.

13. The method of claim 11 further including braiding the wall as a circumferentially continuous, seamless wall.

14. The method of claim 11 further including braiding the wall having opposite edges extending substantially parallel to the longitudinal axis with the edges.

15. The method of claim 14 further including thermally forming the wall to bring the opposite edges into biased overlapping relation with one another.

## Patentansprüche

1. Geflechtschutzschlauch, umfassend:
eine Wand, die sich entlang einer Längsachse des Schlauchs erstreckt, wobei die Wand eine Vielzahl von Monofilament- und Multifilamentgarnen umfasst, die Innen- und Außenfläche des Schlauches bilden, wobei die Innenfläche einen inneren Hohlraum begrenzt und die Außenfläche der Umgebung ausgesetzt ist, wobei die geflochtenen Garne miteinander in einem X/Y-Flechtmuster geflochten sind, wobei X und Y sich voneinander unterscheidende Zahlenwerte sind, **dadurch gekennzeichnet, dass** die in dem höheren der X- und Y-Zahlenwerte verwendeten Garne Multifilamente umfassen und die in dem kleineren der X- und Y-Zahlenwerte verwendeten Garne Monofilamente umfassen.

2. Geflechtschutzschlauch nach Anspruch 1, ferner umfassend eine Vielzahl von eingefügten Garnen, wobei sich die eingefügten Garne im Wesentlichen parallel zur Längsachse erstrecken und mit den geflochtenen Garnen verflochten sind.

3. Geflechtschutzschlauch nach Anspruch 2, wobei die eingefügten Garne entweder dem inneren Hohlraum ausgesetzt und vor der Umgebung durch die Außenfläche im Wesentlichen verborgen oder der Umgebung ausgesetzt und vor dem inneren Hohlraum im Wesentlichen verborgen sind.

4. Geflechtschutzschlauch nach Anspruch 2, wobei zumindest einige der eingefügten Garne dem inneren Hohlraum ausgesetzt und vor der Umgebung durch die Außenfläche im Wesentlichen verborgen und zumindest einige der eingefügten Garne der Umgebung ausgesetzt und vor dem inneren Hohlraum im Wesentlichen verborgen sind.

5. Geflechtschutzschlauch nach Anspruch 2, wobei zumindest einige der eingefügten Garne ein niedrig schmelzendes Polymermaterial sind oder Multifilamente sind oder Monofilamente sind.

6. Geflechtschutzschlauch nach Anspruch 1, wobei X und Y ungerade Zahlenwerte sind, zum Beispiel wobei X einen Zahlenwert von 1 aufweist und Y einen Zahlenwert von 3 aufweist.

7. Geflechtschutzschlauch nach Anspruch 1, wobei X und Y gerade Zahlenwerte sind, zum Beispiel wobei X einen Zahlenwert von 2 aufweist und Y einen Zahlenwert von 6 aufweist.

8. Geflechtschutzschlauch nach Anspruch 1, wobei X und Y Zahlenwerte aufweisen, die Vielfaches voneinander sind.

9. Geflechtschutzschlauch nach Anspruch 1, wobei X einen ungeraden Zahlenwert aufweist und Y einen geraden Zahlenwert aufweist.

10. Geflechtschutzschlauch nach Anspruch 1, wobei die Wand entweder eine umfangsmäßig ununterbrochene, nahtlose Wand ist oder gegenüberliegende Ränder aufweist, die sich im Wesentlichen parallel zur Längsachse erstrecken, wobei die Ränder in überlappende Beziehung miteinander vorbelastet werden.

11. Verfahren zum Aufbau eines textilen Schutzschlauches, umfassend:
eine Wand flechten, die Monofilament- und Multifilamentgarne umfasst, die ein X/Y-Flechtmuster aufweisen, das sich entlang einer Längsachse erstreckt, wobei eine Innenfläche der Wand einen inneren Hohlraum begrenzt und eine Außenfläche der Wand der Umgebung ausgesetzt ist, wobei die X- und Y-Werte des X/Y-Flechtmusters sich voneinander unterscheidende Zahlenwerte sind; **gekennzeichnet durch**
Bereitstellen von Garnen, die im höheren der X- und Y-Zahlenwerte als Multifilamente verwendet werden, und Bereitstellen von Garnen, die im kleineren der X- und Y-Zahlenwerte als Monofilamente verwendet werden.

12. Verfahren nach Anspruch 11, ferner umfassend:
eine Vielzahl von Garnen, die sich im Wesentlichen parallel zur Längsachse erstrecken, mit den geflochtenen Garnen verflechten und, optional,
die verflochtenen Garne dem inneren Hohlraum aussetzen und die verflochtenen Garne vor Aussetzung gegenüber der Umgebung im Wesentlichen verbergen oder
die verflochtenen Garne der Umgebung aussetzen und die verflochtenen Garne vor Aussetzung gegenüber dem inneren Hohlraum im Wesentlichen verbergen oder
zumindest einige der verflochtenen Garne dem inneren Hohlraum aussetzen und diese vor Aussetzung gegenüber der Umgebung im Wesentlichen verbergen und zumindest einige der verflochtenen Garne der Umgebung aussetzen und diese vor Aussetzung gegenüber dem inneren Hohlraum im Wesentlichen verbergen.

13. Verfahren nach Anspruch 11, ferner umfassend das Flechten der Wand als eine umfangsmäßig ununterbrochene, nahtlose Wand.

14. Verfahren nach Anspruch 11, ferner umfassend das Flechten der Wand, die gegenüberliegende Ränder aufweist, die sich im Wesentlichen parallel zur Längsachse erstrecken, mit den Rändern.

15. Verfahren nach Anspruch 14, ferner umfassend das thermische Umformen der Wand, um die gegenüberliegenden Ränder in vorbelastete überlappende Beziehung miteinander zu bringen.

## Revendications

1. Manchon protecteur tressé comprenant :
une paroi s'étendant le long d'un axe longitudinal dudit manchon, ladite paroi comprenant une pluralité de fils monofilaments et multifilaments tressés formant les surfaces interne et externe dudit manchon, ladite surface interne délimitant une cavité intérieure et ladite surface externe étant exposée à l'environnement circonvoisin, lesdits fils tressés étant tressés les uns avec les autres selon un motif de tressage X/Y, X et Y étant des valeurs numériques différentes les unes des autres, **caractérisé en ce que** les fils utilisés dans la plus grande des valeurs numériques X et Y comprennent des multifilaments et les fils utilisés dans la plus petite des valeurs numériques X et Y comprennent des mono filaments.

2. Manchon protecteur tressé selon la revendication 1, comprenant en outre une pluralité de fils insérés, lesdits fils insérés s'étendant sensiblement parallèles audit axe longitudinal et étant entrelacés avec lesdits fils tressés.

3. Manchon protecteur tressé selon la revendication 2, lesdits fils insérés étant soit exposés à ladite cavité intérieure et sensiblement dissimulés par rapport à l'environnement circonvoisin par ladite surface externe, soit exposés à l'environnement circonvoisin et sensiblement dissimulés par rapport à ladite cavité intérieure.

4. Manchon protecteur tressé selon la revendication 2, au moins certains desdits fils insérés étant exposés à ladite cavité intérieure et sensiblement dissimulés par rapport à l'environnement circonvoisin par ladite surface externe et au moins certains desdits fils insérés étant exposés à l'environnement circonvoisin et sensiblement dissimulés par rapport à ladite cavité intérieure.

5. Manchon protecteur tressé selon la revendication 2, au moins certains desdits fils insérés étant constitués d'un matériau polymère à bas point de fusion ou étant des multifilaments ou étant des monofilaments.

6. Manchon protecteur tressé selon la revendication 1, X et Y étant des valeurs numériques impaires, par exemple, X possédant une valeur numérique égale à 1 et Y possédant une valeur numérique égale à 3.

7. Manchon protecteur tressé selon la revendication 1, X et Y étant des valeurs numériques paires, par exemple, X possédant une valeur numérique égale à 2 et Y possédant une valeur numérique égale à 6.

8. Manchon protecteur tressé selon la revendication 1, X et Y possédant des valeurs numériques qui sont des multiples les unes des autres.

9. Manchon protecteur tressé selon la revendication 1, X possédant une valeur numérique impaire et Y possédant une valeur numérique paire.

10. Manchon protecteur tressé selon la revendication 1, ladite paroi étant une paroi sans couture circonférentiellement continue ou possédant des bords opposés s'étendant sensiblement parallèles audit axe longitudinal, lesdits bords étant sollicités dans une relation de chevauchement l'un avec l'autre.

11. Procédé de construction d'un manchon protecteur textile comprenant : le tressage d'une paroi comprenant des fils mono filaments et multifilaments possédant un motif de tressage X/Y s'étendant le long d'un axe longitudinal avec une surface interne de la paroi délimitant une cavité intérieure et une surface externe de la paroi exposée à l'environnement circonvoisin, lesdites valeurs X et Y du motif de tressage X/Y étant des valeurs numériques différentes les unes des autres ; **caractérisé par** la fourniture des fils utilisés dans la plus grande des valeurs numériques X et Y sous la forme de multifilaments et la fourniture des fils utilisés dans la plus petite des valeurs numériques X et Y sous la forme de monofilaments.

12. Procédé selon la revendication 11, comprenant en outre
l'entrelacement d'une pluralité de fils s'étendant sensiblement parallèles à l'axe longitudinal avec les fils tressés et, éventuellement,
l'exposition des fils entrelacés à la cavité intérieure et la dissimulation de manière sensible des fils entrelacés par rapport à une exposition à l'environnement circonvoisin ou
l'exposition des fils entrelacés à l'environnement circonvoisin et la dissimulation de manière sensible des fils entrelacés par rapport à l'exposition à la cavité intérieure ou
l'exposition d'au moins certains des fils entrelacés à la cavité intérieure et la dissimulation de manière sensible de ces-derniers par rapport à une exposition à l'environnement circonvoisin et l'exposition d'au moins certains des fils entrelacés à l'environnement circonvoisin et la dissimulation de manière sensible de ces-derniers par rapport à une exposition à la cavité intérieure.

13. Procédé selon la revendication 11, comprenant en outre le tressage de la paroi sous la forme d'une paroi sans couture circonférentiellement continue.

14. Procédé selon la revendication 11, comprenant en outre le tressage de la paroi possédant des bords opposés s'étendant sensiblement parallèles à l'axe longitudinal avec les bords.

15. Procédé selon la revendication 14, comprenant en outre le formage thermique de la paroi pour amener les bords opposés dans une relation de chevauchement sollicitée l'un avec l'autre.
